Europäisches Patentamt

European Patent Office

Office européen des brevets

(11) Numéro de publication: **0 153 236**
**A 1**

## (12) DEMANDE DE BREVET EUROPEEN

(21) Numéro de dépôt: 85400232.6

(22) Date de dépôt: 13.02.85

(51) Int. Cl.⁴: **B 60 P 3/10**

(30) Priorité: 15.02.84 FR 8402278

(43) Date de publication de la demande: 28.08.85
Bulletin 85/35

(84) Etats contractants désignés: **BE CH DE FR GB IT LI NL SE**

(71) Demandeur: **VALEO, 64 Avenue de la Grande Armée, F-75017 Paris (FR)**

(72) Inventeur: **Jeanson, René H., La Cour, F-85200 Auzay (FR)**

(74) Mandataire: **Lemoine, Robert et al, Cabinet Malémont 42, Avenue du Président Wilson, F-75116 Paris (FR)**

(54) Remorque pour la mise hors d'eau et le transport des bateaux, notamment des bateaux de plaisance.

(57) La remorque selon l'invention comprend un châssis comportant deux pivots verticaux (14a, 14b) disposés symétriquement par rapport à son axe longitudinal (15), deux bras de retenue (13a, 13b) articulés sur les pivots (14a, 14b) et destinés à recevoir la partie antérieure de la coque du bateau (10) entre eux, un vérin (16) reliant les bras (13a, 13b) à leur partie antérieure, deux porte-mains (17a, 17b) articulés aux extrémités postérieures des bras de retenue (13a, 13b) et des mains de préhension (19a, 19b) articulées sur les porte-mains (17a, 17b). Les bras de retenue (13a, 13b) comportent des secteurs dentés identiques (20a, 20b) centrés sur les pivots (14a, 14b) du châssis et dont les dents sont en prise sur l'axe longitudinal (15) de celui-ci. En outre, les porte-mains (17a, 17b) sont reliés à pivotement à des bras auxiliaires (21a, 21b) articulés sur les pivots (14a, 14b) du châssis, ces bras auxiliaires comportant à leur tour des secteurs dentés identiques centrés sur les pivots (14a, 14b) du châssis et dont les dents sont également en prise sur l'axe longitudinal (15) de celui-ci.

Le système de bras 12 permet un centrage parfait du bateau (10) sur la remorque, ce qui évite une mauvaise répartition de la charge sur celle-ci et élimine les risques de retournement.

Remorque pour la mise hors d'eau et le transport des bateaux, notamment
des bateaux de plaisance

La présente invention concerne une remorque pour la mise hors d'eau
et le transport des bateaux, notamment des bateaux de plaisance, comprenant un
châssis comportant deux pivots verticaux disposés symétriquement par rapport à
son axe longitudinal, deux bras de retenue articulés sur les pivots, formant un
V ouvert vers l'arrière du châssis et destinés à recevoir la partie antérieure
de la coque du bateau entre eux, un vérin reliant les bras à leur partie antérieure pour les positionner ou les faire pivoter symétriquement par rapport à
l'axe longitudinal du châssis, deux porte-mains articulés autour de pivots
verticaux prévus aux extrémités postérieures des bras de retenue, et des mains
de préhension articulées sur les porte-mains.

L'installation d'un bateau sur une remorque est une opération très
délicate. L'opérateur doit en effet exécuter de nombreuses manoeuvres pour
pouvoir centrer parfaitement le bateau sur la remorque, de manière à éviter une
mauvaise répartition de la charge sur celle-ci et à éliminer ainsi tout risque
de renversement pendant le transport.

Les difficultés que l'on rencontre actuellement avec les remorques du
type précité proviennent essentiellement du fait que les porte-mains ne restent
pas symétriques par rapport à l'axe longitudinal de la remorque pendant l'introduction du bateau entre les bras de retenue.

La présente invention se propose de remédier à ces difficultés et,
pour ce faire, elle a pour objet une remorque du type susmentionné qui se
caractérise en ce que les bras de retenue comportent des secteurs dentés identiques centrés sur les pivots du châssis et dont les dents sont en prise sur l'axe
longitudinal de celui-ci, et en ce que les porte-mains sont reliés à pivotement
à des bras auxiliaires articulés sur les pivots du châssis, ces bras auxiliaires comportant à leur
tour des secteurs dentés identiques centrés sur les pivots du châssis et dont les dents sont également
en prise sur l'axe longitudinal de celui-ci.

Grâce à cet ensemble de dispositions, les deux porte-mains demeurent
symétriques par rapport à l'axe longitudinal du châssis de la remorque quel que
soit l'angle formé par les deux bras de retenue. Un centrage parfait du bateau
sur la remorque peut donc maintenant être réalisé de façon automatique. Les
risques d'une mauvaise répartition de la charge sur la remorque et d'un éventuel
renversement du bateau pendant son transport sont par conséquent éliminés.

De préférence, le porte-mains et le bras auxiliaire qui sont situés
d'un même côté de l'axe longitudinal du châssis sont reliés par un téton vertical

2

porté par l'un d'eux et faisant saillie dans une fente longitudinale ménagée dans l'autre.

Lorsque le vérin fait pivoter les bras de retenue, les tétons se déplacent dans les fentes correspondantes tandis que les deux porte-mains restent symétriques par rapport à l'axe longitudinal du châssis bien que l'angle qu'ils forment varie.

Selon un mode de réalisation particulier de l'invention, les pivots du châssis sont portés par un bâti comprenant trois plaques horizontales superposées, les bras de retenue étant articulés sur ces pivots entre la plaque supérieure et la plaque intermédiaire tandis que les bras auxiliaires le sont entre la plaque intermédiaire et la plaque inférieure.

On notera ici que le bâti, grâce à sa configuration particulière, facilite le montage des bras de retenue et des bras auxiliaires sur leur pivot respectif et confère une grande robustesse à l'ensemble.

Avantageusement, les bras de liaison et les bras auxiliaires comportent des manchons enfilés avec un faible jeu sur les pivots du châssis et dont les extrémités prennent chacune appui sur une plaque du bâti par l'intermédiaire d'une rondelle de friction.

Le pivotement des bras de liaison et des bras auxiliaires est bien entendu facilité par la présence de ces rondelles de friction.

Pour éviter que les vibrations engendrées lors du déplacement de la remorque puissent parvenir jusqu'aux mains de préhension et donc à la coque du bateau, un amortisseur centré sur l'axe longitudinal du châssis est de préférence interposé entre ce dernier et le bâti. Cet amortisseur a également pour rôle de supporter le poids de l'ensemble des bras de retenue.

Il est par ailleurs souhaitable que le bâti soit monté pivotant sur le châssis autour d'un axe horizontal s'étendant perpendiculairement aux pivots dudit châssis, pour permettre aux bras de retenue de suivre l'abaissement du bateau lors de sa mise en place sur la remorque.

Selon une autre caractéristique particulière de l'invention, chaque porte-mains comporte au moins deux mains de préhension articulées chacune autour d'un axe horizontal.

Les mains de préhension peuvent ainsi être appliquées intimement contre les coques de bateau aux profils les plus divers, ce qui permet d'utiliser la remorque pour la mise hors d'eau et le transport de bateaux de tous types.

Un mode d'exécution de la présente invention sera décrit ci-après à titre d'exemple nullement limitatif en référence aux dessins annexés dans

3

lesquels :

- La figure 1 est une vue de côté schématique d'une remorque conforme à l'invention telle qu'elle est utilisée pendant la mise hors d'eau d'un bateau ;

- La figure 2 est une vue de dessus des bras de retenue, des porte-mains avec leurs mains et des bras auxiliaires, la coque d'un bateau étant représentée en traits mixtes ;

- La figure 3 est une vue à échelle agrandie effectuée suivant la ligne III-III de la figure 2 ;

- La figure 4 est une vue à échelle agrandie effectuée suivant la ligne IV-IV de la figure 2 ; et

- La figure 5 est une vue à échelle agrandie effectuée suivant la ligne V-V de la figure 2.

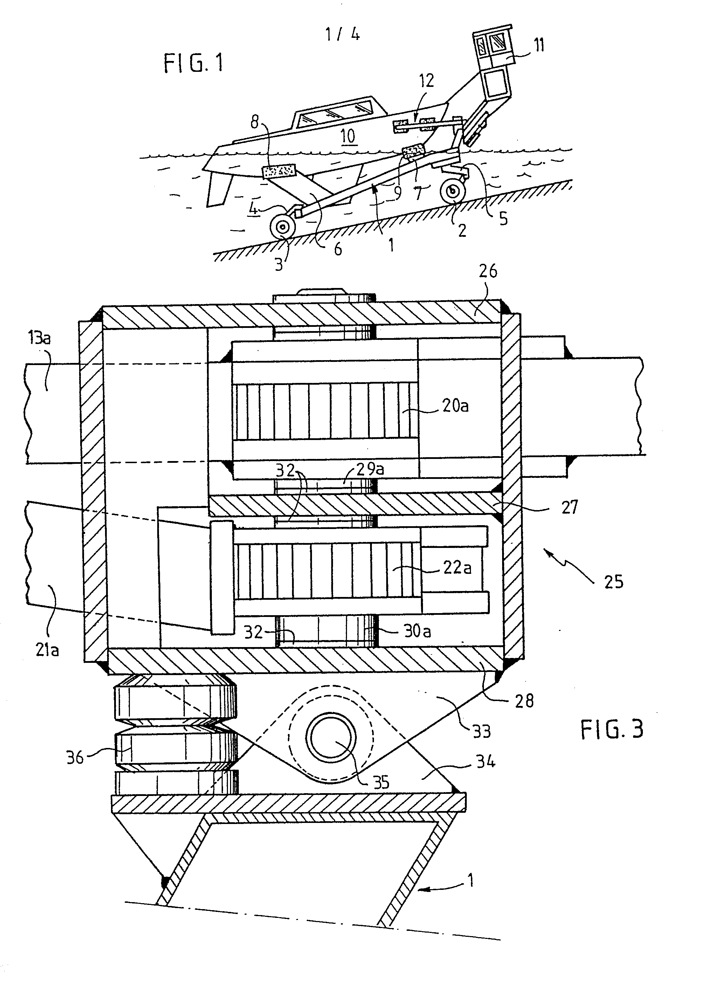

La figure 1 représente de façon schématique une remorque conçue pour la mise hors d'eau et le transport de bateaux de plaisance ou autres. Cette remorque comprend essentiellement un châssis 1 reposant sur des roues avant 2 et arrière 3, des moyens de levage 4, 5 prévus au niveau des roues pour modifier la hauteur du châssis par rapport au sol, des berceaux en forme de V 6, 7 se terminant par des coussins 8, 9 destinés à supporter la coque du bateau 10 à transporter, un poste de pilotage 11 déplaçable en hauteur de façon à le protéger de l'eau pendant l'introduction de la remorque sous le bateau, et un système de bras 12 prévu à l'avant du châssis pour centrer le bateau sur celui-ci.

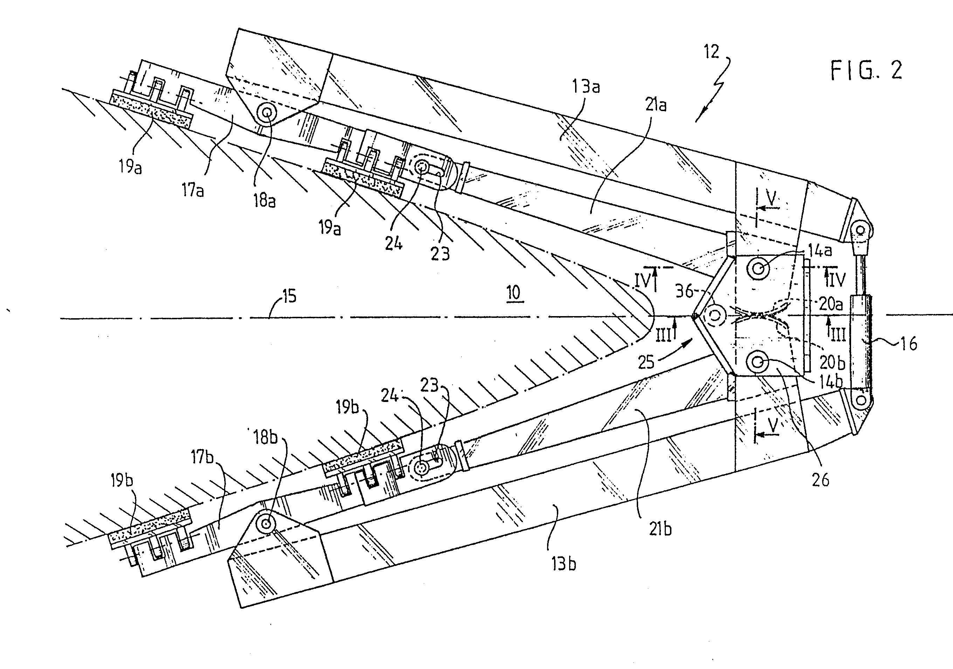

Comme on le voit particulièrement bien sur la figure 2, le système de bras 12 comprend deux bras de retenue 13a, 13b articulés sur deux pivots verticaux 14a, 14b prévus sur le châssis 1, ces pivots étant disposés symétriquement par rapport à l'axe longitudinal 15 de celui-ci. Les deux bras de retenue forment un V ouvert vers l'arrière de manière à recevoir entre eux la partie antérieure de la coque du bateau 10 à transporter. Ils sont reliés à leur partie antérieure par un vérin 16 destiné à les positionner ou à les faire pivoter symétriquement par rapport à l'axe longitudinal 15 du châssis. Ils sont par ailleurs pourvus chacun d'un porte-mains 17a, respectivement 17b, articulé au voisinage de leur extrémité postérieure autour d'un pivot vertical 18a, respectivement 18b.

Les porte-mains 17a, 17b, qui sont situés à l'intérieur de l'angle ménagé par des deux bras de retenue 13a, 13b, portent chacun deux mains 19a,

4

respectivement 19b, destinées à venir contre la coque du bateau se trouvant entre les deux bras de retenue 13a, 13b. On notera ici que les mains 19a, 19b sont articulées chacune autour d'un axe horizontal, ce qui leur permet de venir en contact intime avec des coques de toutes formes.

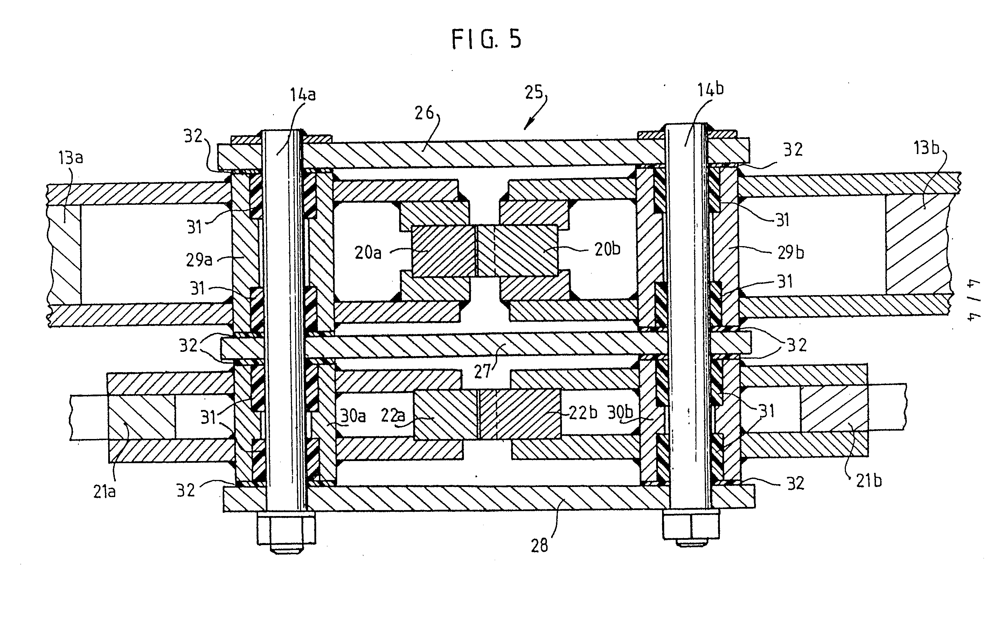

Conformément à l'invention, les bras de retenue 13a, 13b comportent des secteurs dentés identiques 20a, 20b (voir en particulier la figure 5) centrés sur les pivots 14a, 14b du châssis et dont les dents sont en prise sur l'axe longitudinal 15 de celui-ci. Par ailleurs, les porte-mains 17a, 17b sont reliés à pivotement à des bras auxiliaires 21a, 21b articulés sur les pivots 14a, 14b, ces bras comportant à leur tour des secteurs dentés identiques 22a, 22b centrés sur les pivots 14a, 14b et dont les dents sont également en prise sur l'axe longitudinal 15.

Dans le mode de réalisation envisagé ici, chacun des porte-mains 17a, 17b est pourvu à son extrémité antérieure d'une fente longitudinale 23 dans laquelle fait saillie un téton vertical 24 prévu à l'extrémité postérieure du bras auxiliaire correspondant 21a ou 21b. Les tétons 24 se déplacent dans les fentes 23 lorsque le vérin 16 est actionné et permettent ainsi aux porte-mains de pivoter par rapport aux bras auxiliaires tout en restant symétriques par rapport à l'axe longitudinal 15 du châssis.

Il va de soi que l'on ne sortirait pas du cadre de la présente invention si l'on prévoyait les fentes longitudinales 23 à l'extrémité postérieure des bras auxiliaires 21a, 21b et les tétons verticaux 24 à l'extrémité antérieure des porte-mains 17a, 17b.

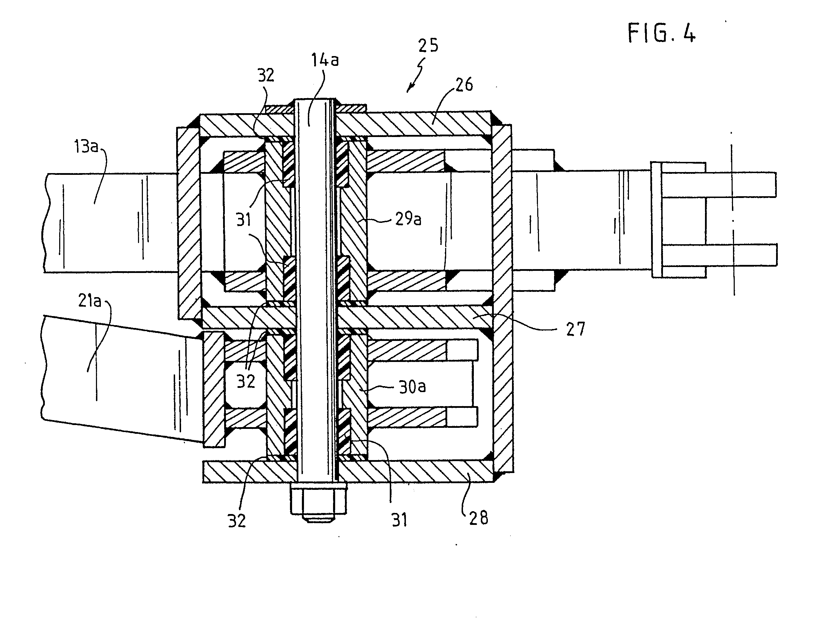

En se référant plus particulièrement aux figures 3 à 5, on remarquera que les pivots 14a, 14b sont portés par un bâti 25 comprenant trois plaques horizontales superposées 26, 27, 28 et que les bras de retenue 13a, 13b sont articulés sur les pivots 14a, 14b entre la plaque supérieure 26 et la plaque intermédiaire 27 alors que les bras auxiliaires 21a, 21b le sont entre la plaque intermédiaire 27 et la plaque inférieure 28.

Comme le montrent les figures 4 et 5, les bras de retenue et les bras auxiliaires comportent des manchons 29a, 29b, respectivement 30a, 30b, par l'intermédiaire desquels ils sont articulés sur leur pivot respectif 14a, 14b, chaque manchon renfermant des garnitures internes 31 et prenant appui sur deux plaques horizontales du bâti 25 par l'intermédiaire d'une rondelle de friction 32 prévue à chacune de ses extrémités.

5

Comme le montre par ailleurs la figure 3, la plaque inférieure 28 du bâti 25 porte sur sa face inférieure une chape verticale 33 s'étendant parallèlement à l'axe longitudinal 15 du châssis et recevant entre ses joues une plaque verticale 34 faisant saillie sur ledit châssis 1. Un axe 35 perpendiculaire à l'axe longitudinal 15 relie la chape 33 à la plaque 34 et permet par conséquent de relier à pivotement le bâti 25 au châssis 1, et par là autorise les bras de retenue a suivre le mouvement du bâteau lors de sa mise en place sur la remorque.

Pour être complet, on notera qu'un amortisseur 36 centré sur l'axe longitudinal 15 est interposé entre le bâti 1 et la plaque inférieure 28 du bâti 25, d'une part pour empêcher les vibrations engendrées pendant le déplacement de la remorque de parvenir jusqu'au bateau, et d'autre part pour supporter le poids de l'ensemble des bras de retenue.

La remorque conforme à la présente invention comporte un système de bras 12 permettant un centrage parfait du bateau à transporter. En effet, grâce aux secteurs dentés 20a, 20b des bras de retenue 13a, 13b et aux bras auxiliaires 21a, 21b, les porte-mains 17a, 17b restent symétriques par rapport à l'axe longitudinal 15 du châssis, quelle que soit la valeur de l'angle formé par les bras de retenue 13a, 13b.

Les risques pour que la remorque se renverse accidentellement du fait d'une mauvaise répartition de la charge reposant sur elle sont donc éliminés, et ce grâce à une solution technique relativement simple.

6

Revendications

1. Remorque pour la mise hors d'eau et le transport des bateaux, notamment des bateaux de plaisance, comprenant un châssis (1) comportant deux pivots verticaux (14a, 14b) disposés symétriquement par rapport à son axe longitudinal (15), deux bras de retenue (13a, 13b) articulés sur les pivots (14a, 14b), formant un V ouvert vers l'arrière du châssis et destinés à recevoir la partie antérieure de la coque du bateau (10) entre eux, un vérin (16) reliant les bras (13a, 13b) à leur partie antérieure pour les positionner ou les faire pivoter symétriquement par rapport à l'axe longitudinal (15) du châssis, deux porte-mains (17a, 17b) articulés autour de pivots verticaux (18a, 18b) prévus aux extrémités postérieures des bras de retenue (13a, 13b), et des mains de préhension (19a, 19b) articulées sur les porte-mains (17a, 17b), caractérisée en ce que les bras de retenue (13a, 13b) comportent des secteurs dentés identiques (20a, 20b) centrés sur les pivots (14a, 14b) du châssis (1) et dont les dents sont en prise sur l'axe longitudinal (15) de celui-ci, et en ce que les porte-mains (17a, 17b) sont reliés à pivotement à des bras auxiliaires (21a, 21b) articulés sur les pivots (14a, 14b) du châssis (1), ces bras auxiliaires comportant à leur tour des secteurs dentés identiques (22a, 22b) centrés sur les pivots (14a, 14b) du châssis (1) et dont les dents sont également en prise sur l'axe longitudinal (15) de celui-ci.

2. Remorque selon la revendication 1, caractérisée en ce que le porte-mains (17a, respectivement 17b) et le bras auxiliaire (21a, respectivement 21b) qui sont situés d'un même côté de l'axe longitudinal (15) du châssis (1) sont reliés par un téton vertical (24) porté par l'un d'eux et faisant saillie dans une fente longitudinale (23) ménagée dans l'autre.

3. Remorque selon la revendication 1 ou 2, caractérisée en ce que les pivots (14a, 14b) du châssis (1) sont portés par un bâti (25) comprenant trois plaques horizontales superposées (26, 27, 28), les bras de retenue (13a, 13b) étant articulés sur ces pivots (14a, 14b) entre la plaque supérieure (26) et la plaque intermédiaire (27) tandis que les bras auxiliaires (21a, 21b) le sont entre la plaque intermédiaire (27) et la plaque inférieure (28).

4. Remorque selon la revendication 3, caractérisée en ce que les bras de liaison (13a, 13b) et les bras auxiliaires (21a, 21b) comportent des manchons (29a, respectivement 29b) enfilés avec un faible jeu sur les pivots (14a, respectivement 14b) du châssis (1) et dont les extrémités prennent chacune

0153236

7

appui sur une plaque du bâti (25) par l'intermédiaire d'une rondelle de friction (32).

5. Remorque selon la revendication 3 ou 4, caractérisée en ce qu'un amortisseur (36) centré sur l'axe longitudinal (15) du châssis (1) est interposé entre ce dernier et le bâti (25).

6. Remorque selon la revendication 5, caractérisée en ce que le bâti (25) est monté pivotant sur le châssis (1) autour d'un axe horizontal (35) s'étendant perpendiculairement aux pivots (14a, 14b) dudit châssis (1).

7. Remorque selon l'une quelconque des revendications précédentes, caractérisée en ce que chaque porte-mains (17a, respectivement 17b) comporte au moins deux mains de préhension (19a, respectivement 19b) articulées chacune autour d'un axe horizontal.

FIG. 1

FIG. 3

FIG. 2

0153236.

FIG. 4

# FIG. 5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-2 827 304 (BACKUS)<br>* Colonne 2, lignes 27-42; figures 3,6 * | 1 | B 60 P 3/10 |
| A | US-A-4 278 388 (JOHNSON)<br>* Colonne 5, lignes 23-30; colonne 5, ligne 52 - colonne 6, ligne 5; figure 3 * | 1,7 | |
| A | FR-A-1 425 470 (LE TUBE)<br>* Page 2, colonne de gauche, lignes 38-46; figure 2 * | 1 | |
| A | US-A-4 262 922 (NELSON)<br>* Colonne 3, lignes 36-38; figures 2-4 * | 5 | |

**DOMAINES TECHNIQUES RECHERCHES (Int. Cl.4)**

B 60 P 3/00
B 63 C 3/00
B 63 C 1/00

Le présent rapport de recherche a été établi pour toutes les revendications

| Lieu de la recherche | Date d'achèvement de la recherche | Examinateur |
|---|---|---|
| LA HAYE | 21-05-1985 | OSBORNE J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82